# EUROPÄISCHE PATENTSCHRIFT

(11) **EP 0 456 049 B1**
(45) Veröffentlichungstag und Bekanntmachung des Hinweises auf die Patenterteilung: **15.02.1995**
(21) Anmeldenummer: 91106750.2
(22) Anmeldetag: 26.04.1991
(51) Int. Cl.: C07F 9/40, C07F 9/38

(54) **Verfahren zur Herstellung von Vinylphosphonsäurederivaten**
Process for the preparation of vinylphosphonic acid derivatives
Procédé de préparation de dérivés d'acide vinylphosphonique

(30) Priorität: 07.05.1990 DE 4014483
(43) Veröffentlichungstag der Anmeldung: 13.11.1991
(73) Patentinhaber: BASF Aktiengesellschaft, 67063 Ludwigshafen (DE)
(72) Erfinder: Northemann, Andreas, Dr., W-6700 Ludwigshafen (DE); Fischer, Martin, Dr., W-6700 Ludwigshafen (DE); Wambach, Ludwig, Dr., W-6900 Heidelberg (DE)

(56) Entgegenhaltungen:
- EP-A- 0 032 663
- DE-A- 1 900 858
- US-A- 3 064 030

## Beschreibung

Die vorliegende Erfindung betrifft ein neues Verfahren zur Herstellung von Vinylphosphonsäurederivaten der allgemeinen Formel I 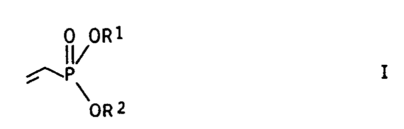
in der R¹ und R² gleich oder verschieden sein können und für Wasserstoff oder einen C₁-C₈-Alkyl- oder C₆-C₁₀-Aryl- oder -Aralkylrest, die mit Cl oder Br substituiert sein können, stehen, wobei R¹ und R² auch zu einem alicyclischen Ring mit 3 bis 12 Ring-C-Atomen verbunden sein können.

Die Darstellung von Vinylphosphonsäurederivaten in der Flüssigphase durch Erhitzen von 2-Acetoxyethanphosphonsäuredialkylestern in Gegenwart saurer oder basischer Katalysatoren ist aus der DE-A-30 01 894 bekannt. Die Ausbeuten sind allerdings unbefriedigend. In der DE-A-31 20 437 wird ein Verfahren beschrieben, in dem wie im erstgenannten Verfahren ein Vielkomponentengemisch entsteht, welches mit Orthoestern zu Vinylphosphonsäuredialkylestern umgesetzt wird. Dieses zweistufige Verfahren ist aufwendig und wegen des hohen Preises für die Orthoester wenig ökonomisch. In der DE-A-37 07 149 wird ein Verfahren zur Darstellung von Vinylphosphonsäureestern beschrieben, in welchem in homogener Flüssigphase durch Abspaltung von Essigsäure aus 2-Acetoxyethanphosphonsäuredialkylester Vinylphosphonsäuredialkylester gebildet wird. Dieses Verfahren läßt in verfahrenstechnischer Hinsicht zu wünschen übrig, da die Verfahrensprodukte permanent über Vakuum abdestilliert werden müssen, die Raum-Zeit-Ausbeuten geringer sind und der anfallende Katalysatorsumpf nach einiger Zeit regeneriert werden muß. Die DE-A 1 900 858 beschreibt ein Verfahren zur Herstellung von α,β-olefinisch ungesättigten Phosphonsäurealkylestern, bei dem man in der Flüssigphase ein entsprechendes β-Halogenalkylphosphonat über basischem Aluminiumoxyd dehydrohalogeniert. Dieses Verfahren erzielt eine hohe Ausbeute und Selektivität, es weist aber eine geringe Raum-Zeit-Ausbeute auf.

Der Erfindung lag daher als Aufgabe zugrunde, diesen Nachteilen abzuhelfen.

Demgemäß wurde ein Verfahren zur Herstellung von Vinylphosphonsäurederivaten der Formel I 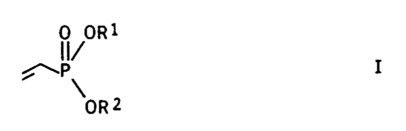
in der R¹ und R² gleich oder verschieden sein können und für Wasserstoff oder einen C₁-C₈-Alkyl- oder C₆-C₁₀-Aryl- oder -Aralkylrest, die mit Cl oder Br substituiert sein können, stehen, wobei R¹ und R² auch zu einem alicyclischen Ring mit 3 bis 12 Ring-C-Atomen verbunden sein können, gefunden, gemäß welchem ein Ethanphosphonsäureester der allgemeinen Formel II 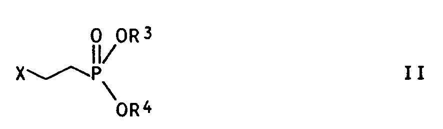
wobei X, R³ und R⁴ die in Anspruch 1 genannte Bedeutung haben, in der Gasphase in Gegenwart fester Katalysatoren umgesetzt wird.

Die Ausgangsverbindungen II sind literaturbekannt und lassen sich z.B. durch Umsetzung von Diethyl- oder Dimethylphosphonit mit Vinylverbindungen in Gegenwart von Peroxiden (J. Amer. Chem. Soc., 79, 1957, S. 1961-1963) erhalten.

Als Ausgangsverbindungen kommen Ethanphosphonsäurederivate der allgemeinen Formel II in Betracht, in denen
- X: für eine Hydroxygruppe, ein Halogen wie Brom und insbesondere Chlor oder insbesondere einen Rest 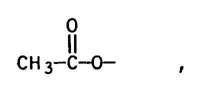 C₂H₅-COO-, C₃H₇COO-oder C₄H₉COO- steht,
- R³ und R⁴: für gleiche oder verschiedene Reste stehen, die vorzugsweise folgende Bedeutung haben:
- Alkyl wie C₁-C₈-Alkyl, bevorzugt C₁-C₄-Alkyl wie Methyl, Ethyl, n-Propyl, iso-Propyl, n-Butyl, iso-Butyl und sek.-Butyl, insbesondere Methyl und Ethyl,
- Aryl oder Aralkyl wie Phenyl und insbesondere Benzyl.
   R³ und R⁴ können auch zu einem alicyclischen Ring mit 3 bis 12 C-Atomen verbunden sein.

Besonders bevorzugt werden Verbindungen der allgemeinen Formel II umgesetzt, in denen R³ und R⁴ gleich oder verschieden sind und für Methyl oder Ethyl stehen.

Als Katalysatoren eignen sich grundsätzlich Phosphate, saure Oxide, insbesondere des Siliciums, Aluminiums und Bors und Trägermaterialien, die sauere Stoffe enthalten. Als saure Stoffe eignen sich Mineralsäuren oder deren saure Salze wie Natriumdihydrogenphosphat oder Natriumhydrogensulfat. Besonders bevorzugte Katalysatoren sind Kieselgel, z.B. Kieselgel D₁₁₋₁₀® oder Aluminiumoxid, z.B. Aluminiumoxid D₁₀₋₂₀®.

Weitere bevorzugte Katalysatoren sind mit 0,1 bis 20, insbesondere 1 bis 5 Gew.-% Alkalimetall- oder Erdalkalimetalloxiden dotierte Trägermaterialien, wobei als Trägermaterialien Aluminiumoxid oder Kieselgel in neutraler Form bevorzugt sind.

Bevorzugte Katalysatoren sind:

### Katalysator A:

Handelsübliches SiO₂ (D₁₁₋₁₀®, BASF) in Form von Stangenpreßlingen.

### Katalysator B:

Handelsübliches Al₂O₃ (D₁₀₋₂₀®, BASF) in Form von Stangenpreßlingen.

### Katalysator C:

Katalysator A, der mit Phosphorsäure getränkt, bei 110°C getrocknet und bei 500°C 14 h calciniert wird. Er enthält 28,97 Gew.-% P₂O₅.

### Katalysator D:

Katalysator A, der mit Borsäure getränkt, bei 110°C getrocknet und bei 500°C 14 h calciniert wird. Er enthält 10,2 Gew.-% B₂O₃.

### Katalysator E:

Katalysator B, der mit Natronlauge getränkt, bei 110°C getrocknet und bei 500°C 14 h calciniert wird. Er enthält 1,5 Gew.-% Na₂O.

Das Verhältnis Edukt zu Katalysator beträgt vorzugsweise 0,01 bis 10, insbesondere 0,1 bis 3 g Edukt/g Katalysator·h bei kontinuierlicher Fahrweise.

Die Umsetzung erfolgt üblicherweise in einem Reaktionsrohr, in welches der Katalysator eingefüllt und erhitzt wird.

Die Temperaturen der Umsetzung liegen vorzugsweise bei 250 bis 400, bevorzugt 260 bis 300°C. Tiefere und höhere Temperaturen sind möglich, bringen aber im allgemeinen keine besonderen Vorteile mehr.

Das Verfahren kann diskontinuierlich und bevorzugt kontinuierlich durchgeführt werden, wobei es sich empfiehlt, zur Erzielung hoher Selektivitäten als Verweilzeiten der Reaktanten in der Katalysatorzone 0,05 bis 60, bevorzugt 0,5 bis 10 sec. zu wählen.

Zum Regulieren der Kontaktzeiten wie auch zur Verdünnung der Reaktanten, wird das Gasgemisch vorzugsweise mit inerten Trägergasen vermischt.

Dabei werden die Ausgangsverbindungen in der Regel in einem vorgeschalteten Verdampfer bei 180 bis 270°C, vorzugsweise 200 bis 250°C verdampft und dabei mit den Trägergasen vermischt.

Als Trägergase eignen sich die üblicherweise verwendeten inerten Gase wie Stickstoff, Wasserstoff, Wasser, Kohlendioxid und Argon und bevorzugt niedrigsiedende Alkohole wie Methanol und Ethanol und besonders bevorzugt Alkohol-Inertgasmischungen, wobei die Alkohole die Lebensdauer des Katalysators erhöhen. Der Alkohol wird zum Ausgangsprodukt im Molverhältnis von 10:1 bis 0,1:1, insbesondere 0,5:1 bis 5:1 zugesetzt.

Das Verfahren kann bei Normal-, Unter- oder Überdruck, beispielsweise von 10 mbar bis 5 bar, vorzugsweise jedoch unter Atmosphärendruck ausgeführt werden.

Die Aufarbeitung bietet methodisch keine Besonderheiten. Sie kann zur Gewinnung der Vinylphosphonsäure direkt erfolgen oder zur Gewinnung der Vinylphosphonsäureester destillativ ausgeführt werden.

Besondere Bedeutung hat das erfindungsgemäße Verfahren für die Herstellung von Vinylphosphonsäurederivaten der allgemeinen Formel I, in der R¹ und R² gleich oder verschieden sein können und für Wasserstoff, einen Methyl- oder Ethylrest stehen durch Abspaltung von Essigsäure aus 2-Acetoxyethanphosphonsäuredimethylester.

Vinylphosphonsäurederivate sind Vorprodukte für die Herstellung von Vinylphosphonsäure sowie Monomere für die Herstellung von Klebe- und Kunststoffen.

### Beispiele 1 bis 6

Ein Gemisch aus Acetoxyethanphosphonsäuredialkylester und Alkanol im Molverhältnis y wurde bei 220°C verdampft und mit einem Stickstoffstrom von 40,0 l/h bei einer Temperatur von 270°C über den Katalysator mit einer Verweilzeit in der Katalysatorzone von 3,5 sec geleitet. Das Reaktionsprodukt wurde kondensiert. Weitere Einzelheiten der Versuche zeigt die Tabelle 1. Die Katalysatoren A bis D entsprechen den in der vorstehenden Beschreibung erläuterten und beschriebenen Produkten.

| Beispiel | R¹ | R² | X | y | Laufzeit [h] | Katalys. | Verbindungen [%] | | |
|---|---|---|---|---|---|---|---|---|---|
| | | | | | | | 1 | 2 | 3 |
| 1 | Methyl | Methyl | Acetoxy | 1:1 | 6 | A | 49 | 28 | 9 |
| 2 | Methyl | Methyl | Acetoxy | 1:1 | 6 | B | 40^{a)} | | |
| 3 | Methyl | Methyl | Acetoxy | 1:1 | 6 | C | 52 | 23 | 4 |
| 4 | Methyl | Methyl | Acetoxy | 1:1 | 6 | D | 46 | 24 | 12 |
| 5 | Ethyl | Ethyl | Acetoxy | 1:1 | 6 | A | 41 | 15 | 3 |
| 6 | Ethyl | Ethyl | Acetoxy | 1:1 | 6 | C | 45 | 14 | 7 |
| Verbindung 1: R¹ = wie eingesetzt R² = wie eingesetzt 2: R¹ = wie eingesetzt R² = Wasserstoff 3: R¹ = Wasserstoff R² = Wasserstoff | | | | | | | | | |

| | | | | | | | | | |
|---|---|---|---|---|---|---|---|---|---|
| ^{a)} Rest = Edukt | | | | | | | | | |

### Beispiel 7

Chlorethanphosphonsäurebischlorethylester (0,05 mol/h) wurde bei 220°C verdampft und mit einem Stickstoffstrom von 50,5 l/h bei 270°C über Katalysator E geleitet. Nach 3 h Laufzeit bestand der Austrag zu 85 % aus Ausgangsmaterial und zu 15 % aus Vinylphosphonsäurebischlorethylester.

## Patentansprüche

1. Verfahren zur Herstellung von Vinylphosphonsäurederivaten der allgemeinen Formel I 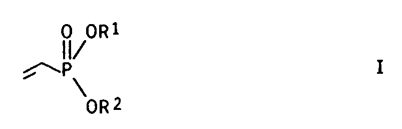 in der R¹ und R² gleich oder verschieden sein können und für Wasserstoff oder einen C₁-C₈-Alkyl- oder C₆-C₈-Aryl- oder -Aralkylrest stehen, die mit Cl oder Br substituiert sein können, wobei R¹ und R² auch zu einem alicyclischen Ring mit 3 bis 12 Ring-C-Atomen verbunden sein können, dadurch gekennzeichnet, daß man einen Ethanphosphonsäureester der allgemeinen Formel II 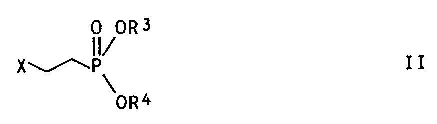 in der R³ und R⁴ die gleiche Bedeutung wie R¹ und R² haben, jedoch kein Wasserstoffatom sind, X für eine Hydroxygruppe, ein Halogen oder einen Rest -OR⁵ steht, wobei R⁵ ein Wasserstoffatom oder einen Rest 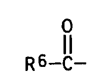 darstellt und R⁶ ein C₁-C₆-Alkylrest oder ein alicyclischer Ring ist, in der Gasphase in Gegenwart fester Katalysatoren umsetzt.

2. Verfahren nach Anspruch 1, dadurch gekennzeichnet, daß man als Katalysatoren Phosphate, saure Oxide oder saure Stoffe enthaltende Trägermaterialien verwendet.

3. Verfahren nach den Ansprüchen 1 und 2, dadurch gekennzeichnet, daß man als Katalysatoren saure Oxide der Elemente Si, B und Al verwendet.

4. Verfahren nach den Ansprüchen 1 und 2, dadurch gekennzeichnet, daß man als Katalysatoren 0,1 bis 20 Gew.-% Alkalimetall- oder Erdalkalimetalloxid enthaltende Trägermaterialien verwendet.

5. Verfahren nach den Ansprüchen 1 bis 4, dadurch gekennzeichnet, daß man die Umsetzung in der Gasphase bei Temperaturen von 250 bis 400°C durchführt.

6. Verfahren nach den Ansprüchen 1 bis 5, dadurch gekennzeichnet, daß die Verweilzeit der Reaktanden in der Katalysatorzone 0,05 bis 60 sec. beträgt.

7. Verfahren nach den Ansprüchen 1 bis 6, dadurch gekennzeichnet, daß man die Reaktanden mit einem Inertgas verdünnt.

8. Verfahren nach den Ansprüchen 1 bis 7, dadurch gekennzeichnet, daß man als Inertgas Methanol, Ethanol, Stickstoff, Wasserstoff, Kohlendioxid, Argon oder Wasser oder deren Mischungen verwendet.

## Claims

1. A process for preparing vinylphosphonic acid derivatives of the general formula I 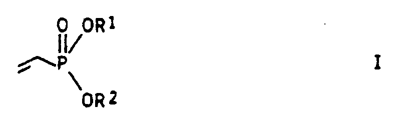 where R¹ and R² can be identical or different and are hydrogen or a C₁-C₈-alkyl or C₆-C₈-aryl or C₆-C₈-aralkyl radical, each of which can be substituted by Cl or Br, with R¹ and R² also being able to be connected to form an alicyclic ring having from 3 to 12 carbon atoms in the ring, which comprises reacting an ethanephosphonic ester of the general formula II 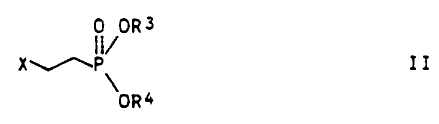 where R³ and R⁴ have the same meanings as R¹ and R², but are not hydrogen, X is hydroxyl, a halogen or a radical -OR⁵, with R⁵ being hydrogen or a radical 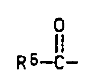 and R⁶ being a C₁-C₆-alkyl radical or an alicyclic ring, in the gas phase in the presence of solid catalysts.

2. A process as claimed in claim 1, wherein the catalysts used are phosphates, acid oxides or carrier materials containing acid substances.

3. A process as claimed in claim 1 or 2, wherein the catalysts used are acid oxides of the elements Si, B and Al.

4. A process as claimed in claim 1 or 2, wherein the catalysts used are carrier materials containing from 0.1 to 20 % by weight of alkali metal oxide or alkaline earth metal oxide.

5. A process as claimed in any of claims 1 to 4, wherein the reaction is carried out in the gas phase at from 250 to 400°C.

6. A process as claimed in any of claims 1 to 5, wherein the residence time of the reactants in the catalyst zone is from 0.05 to 60 seconds.

7. A process as claimed in any one of claims 1 to 6, wherein the reactants are diluted with an inert gas.

8. A process as claimed in any one of claims 1 to 7, wherein the inert gas used is methanol, ethanol, nitrogen, hydrogen, carbon dioxide, argon or water, or mixtures thereof.

## Revendications

1. Procédé de fabrication de dérivés de l'acide vinylphosphonique de la formule générale I 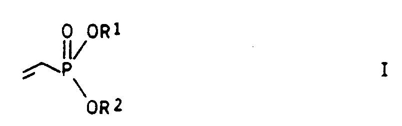 dans laquelle R¹ et R² peuvent avoir des significations identiques ou différentes et représentent chacun un atome d'hydrogène ou un radical alkyle en C₁-C₈, aryle en C₆-C₈ ou aralkyle en C₆-C₈, qui peuvent être substitués par du chlore ou du brome et R¹ et R² peuvent aussi être liés à un noyau alicyclique qui comporte de 3 à 12 atomes de carbone dans le cycle, caractérisé en ce que l'on fait réagir un ester de l'acide éthanephosphonique de la formule générale II 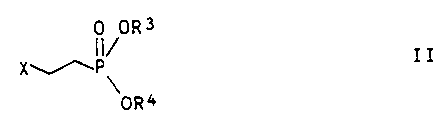 dans laquelle R³ et R⁴ possèdent les mêmes significations que celles attribuées à R¹ et R² mais ne représentent cependant pas d'atomes d'hydrogène, X représente un radical hydroxyle, un atome d'halogène ou un radical -OR⁵ où R⁵ représente un atome d'hydrogène ou un radical de la formule 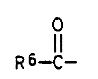 et R⁶ représente un radical alkyle en C₁-C₆ ou un noyau alicyclique, en phase gazeuse et en présence de catalyseurs solides.

2. Procédé suivant la revendication 1, caractérisé en ce que l'on utilise, à titre de catalyseurs, des matériaux de support contenant des substances acides, des oxydes acides, ou des phosphates.

3. Procédé suivant les revendications 1 et 2, caractérisé en ce que l'on utilise, à titre de catalyseurs, des oxydes d'acides des éléments Si, B et Al.

4. Procédé suivant les revendications 1 et 2, caractérisé en ce que l'on utilise, à titre de catalyseurs, des matériaux de support contenant de 0,1 à 20% en poids d'un oxyde de métal alcalin ou de métal alcalino-terreux.

5. Procédé suivant la revendication 1 à 4, caractérisé en ce que l'on entreprend la réaction en phase gazeuse, à des températures de 250 à 400°C.

6. Procédé suivant l'une quelconque des revendications 1 à 5, caractérisé en ce que la durée de séjour des réactifs dans la zone de catalyseur varie de 0,05 à 60 secondes.

7. Procédé suivant les revendications 1 a 6, caractérisé en ce que l'on dilue les réactifs avec un gaz inerte.

8. Procédé suivant les revendications 1 à 7, caractérisé en ce qu'à titre de gaz inerte, on utilise le méthanol, l'éthanol, l'azote, l'hydrogène, l'anhydride carbonique, l'argon, ou l'eau ou leurs mélanges.
